# EUROPÄISCHE PATENTSCHRIFT

(11) **EP 1 843 539 B1**
(45) Veröffentlichungstag und Bekanntmachung des Hinweises auf die Patenterteilung: **18.06.2008**
(21) Anmeldenummer: 06007112.3
(22) Anmeldetag: 04.04.2006
(51) Int. Cl.: H04L 29/06, H04L 12/58

(54) **Automatische Verifizierung von Messenger-Kontaktdaten**
Automatic verification of messenger contact data
Vérification automatique de données de contact de messager

(43) Veröffentlichungstag der Anmeldung: 10.10.2007
(73) Patentinhaber: Müller Marken GmbH & Co. Betriebs-KG, 90402 Nürnberg (DE)
(72) Erfinder: Oschmann, Michael, 90491 Nürnberg (DE)
(74) Vertreter: Tergau & Pohl Patentanwälte

(56) Entgegenhaltungen:
- EP-A- 1 643 730
- US-A1- 2005 030 937
- US-A1- 2005 235 219
- US-A1- 2006 015 566

## Beschreibung

Die Erfindung betrifft ein Verfahren zur automatischen Verifizierung von Messenger-Kontaktdaten sowie ein entsprechend eingerichtetes Rechnersystem. Die Erfindung betrifft weiter ein Computerprogrammprodukt, welches bei Ausführung auf einem Rechnersystem eine automatische Verifizierung von Messenger-Kontaktdaten erlaubt.

Als ein bedeutender Dienst des Internet werden heute täglich weltweit eine Fülle von Informationen und Nachrichten per E-Mail zwischen lokalen Rechnern ausgetauscht, die über einen Internet-Anschluss verfügen. Bei dem E-Mail-Dienst handelt es sich ähnlich dem Versand von realen Briefen um einen Dienst, der es einem Absender ermöglicht, asynchron mit einem Empfänger zu kommunizieren. Zunehmend gibt es jedoch die Möglichkeit, mittels eines Instant-Messengers oder Instant-Messaging-Systems über ein Netzwerk und insbesondere über Internet in Echtzeit mit anderen Teilnehmern zu kommunizieren. Dabei werden die innerhalb eines Instant-Messaging-Systems zu übermittelnden Nachrichten direkt an den Empfänger gesendet, auf die dieser unmittelbar antworten kann. Auch ist der Austausch von Dateien auf diesem Wege möglich.

Die Dokumente US 2005/0235219, US 2005/0030937 und US 2006/0015566 offenbaren Messengersysteme, in denen die Verfügbarkeit anderen Teilnehmer angezeigt wird.

Über Kontaktlisten, die auch Buddy-Listen genannt werden, ermöglichen es die Instant-Messaging-Systeme einem Teilnehmer, den Online-Status der weiteren, in der Kontaktliste aufgeführten Teilnehmer zu erfahren. Dabei wird dem Teilnehmer, sobald er das Instant-Messaging-System nutzt, angezeigt, welchen Status die weiteren in der Kontaktliste aufgenommenen Teilnehmer haben. Ein solcher Status kann beispielsweise "online", "abwesend", "offline" usw. sein.

Instant-Messaging-Systeme werden von unterschiedlichen Betreibern zur Verfügung gestellt. Aufgrund teilweise proprietärer Protokolle sind die verschiedenen Instant-Messaging-Systeme untereinander zum Teil nicht kompatibel. Die Instant-Messaging-Systeme stehen damit jeweils nur den beim entsprechenden Betreiber angemeldeten Teilnehmern zur Verfügung, die innerhalb des abgeschlossenen Systems mit den anderen angemeldeten Teilnehmern kommunizieren können.

Dennoch hat sich die Echtzeit-Kommunikation innerhalb eines Instant-Messaging-Systems mittlerweile zu einer häufig genutzten Alternative zur asynchronen E-Mail entwickelt. Ähnlich wie bei E-Mail-Adressen, die eine Identifikation eines Adressaten oder eines Empfängers erlauben, werden so genannte Messenger-Kontaktdaten ausgetauscht, unter denen ein Teilnehmer in einem entsprechenden Instant-Messaging-System erreichbar ist. Es ist daher zu erwarten, dass neben den Telefonnummern sowohl des Fest- als auch des Mobilfunk-Netzes und der E-Mail-Adresse zukünftig auch die Messenger-Kontaktdaten, die im Wesentlichen die Adresse innerhalb eines spezifischen Messaging-Systems beinhalten, zu den gebräuchlichen Kontaktdaten einer Person werden.

Es besteht daher Bedarf, angegebene Messenger-Kontaktdaten auf ihre Echtheit und auf ihre Zuordnung zu dem jeweiligen Nutzer zu überprüfen, das heißt zu verifizieren. Eine solche Verifizierung ist beispielsweise notwendig, um bei Kenntnis der Messenger-Kontaktdaten eines Internet-Nutzers eine für einen Geschäftsabschluss notwendige Vertrauenswürdigkeit feststellen zu können. Auch ist eine derartige Verifizierung sinnvoll, wenn beispielsweise in einem öffentlichen Nachschlagewerk spezifischen Nutzern zugeordnete Messenger-Kontaktdaten veröffentlicht werden.

Es ist daher Aufgabe der Erfindung, ein Verfahren und eine Vorrichtung anzugeben, welches bzw. welche eine Verifizierung von Messenger-Kontaktdaten ermöglicht.

Die erstgenannte Aufgabe hinsichtlich des Verfahrens wird erfindungsgemäß durch ein Verfahren zur automatischen Verifizierung von Messenger-Kontaktdaten gelöst, wobei eine Rechnereinheit über eine Datenverbindung eingegebene Messenger-Kontaktdaten eines Nutzers erhält, wobei die Rechnereinheit selbsttätig als Teilnehmer in einem den Messenger-Kontaktdaten zugeordneten Instant-Messaging-System unter Verwendung der erhaltenen Messenger-Kontaktdaten dem Nutzer eine Nachricht mit einer Bestätigungsinformation sendet, wobei eine Nutzereingabe entsprechend der Bestätigungsinformation registriert wird, und wobei daraufhin die Messenger-Kontaktdaten verifiziert werden.

Die Erfindung geht dabei in einem ersten Schritt von der Erkenntnis aus, dass es sich bei den Instant-Messaging-Systemen um abgeschlossene Systeme handelt, in denen jeweils nur die angemeldeten Teilnehmer untereinander kommunizieren oder den jeweiligen Online-Status anderer, ausgewählter Teilnehmer desselben Systems mitgeteilt bekommen. Die unterschiedlichen Instant-Messaging-Systeme werden jeweils durch eine eigene Software des zuständigen Betreibers realisiert und sind infolgedessen untereinander zum Teil nicht kompatibel.

In einem zweiten Schritt geht die Erfindung von der Überlegung aus, dass eine Verifizierung von Kontaktdaten durch eine direkte Kontaktierung einer Person unter den von dieser angegebenen Kontaktdaten erfolgen kann. Die Zuordnung und die Existenz der angegebenen Kontaktdaten kann nämlich in diesem Fall dadurch überprüft werden, dass die unter ihren Kontaktdaten kontaktierte Person mittels einer Bestätigungsinformation zu einer entsprechenden Reaktion aufgefordert wird. Erfolgt die erwartete Reaktion, so ist sichergestellt, dass die angegebenen Kontaktdaten der entsprechenden Person zugeordnet und existent sind.

In einem dritten Schritt geht die Erfindung schließlich von der Überlegung aus, dass sich eine Kontaktierung einer Person unter ihren angegebenen Messenger-Kontaktdaten an sich automatisiert nicht durchführen lässt, da das jeweilige Instant-Messaging-System nur angemeldeten Teilnehmern zur Verfügung steht. Ein automatisierter Versand der Bestätigungsinformation ähnlich maschinell erstellter E-Mails ist somit nicht möglich. Dieses Problem kann jedoch überraschend dadurch gelöst werden, dass eine Rechnereinheit selbsttätig als Teilnehmer in einem Instant-Messaging-System auftritt. Die Rechnereinheit ist hierzu unter eigenen Messenger-Kontaktdaten in einem Instant-Messaging-System als Teilnehmer angemeldet und kann als solcher innerhalb des Instant-Messaging-Systems mit anderen Teilnehmern kommunizieren sowie Daten und Nachrichten austauschen. Zur Kommunikation innerhalb des Instant-Messaging-Systems braucht die angemeldete Rechnereinheit technisch lediglich in die Lage versetzt zu werden, selbsttätig Nachrichten an andere Teilnehmer zu versenden. Dies kann durch entsprechende Hard- und/oder Software realisiert werden.

Zur Verifizierung von eingegebenen Messenger-Kontaktdaten eines Nutzers werden diese der entsprechenden Rechnereinheit zugeleitet. Durch einen entsprechenden Hardware-Baustein oder eine entsprechende Software ertüchtigt, übernimmt die Rechnereinheit die empfangenen Messenger-Kontaktdaten, ermittelt hieraus das zugeordnete Instant-Messaging-System und versendet innerhalb des zugeordneten Instant-Messaging-Systems als ein angemeldeter Teilnehmer unter Verwendung der empfangenen Messenger-Kontaktdaten an den Nutzer eine Nachricht mit einer Bestätigungsinformation. Ein derartiger virtueller Teilnehmer, insbesondere an einem Instant-Messaging-System, wird auch als "Robot" oder kurz "Bot" bezeichnet.

Nur dann, wenn die Bestätigungsinformation unter den angegebenen Messenger-Kontaktdaten auch dem beispielsweise auf eine Bestätigung oder auf eine Nachricht wartenden Nutzer zugeleitet wird, kann dieser unter Verwendung der Bestätigungsinformation entsprechend reagieren. Wird demzufolge eine Nutzereingabe entsprechend der Bestätigungsinformation registriert, so können daraufhin die Messenger-Kontaktdaten verifiziert werden.

Für die Erfindung ist es nicht notwendig, dass die Registrierung einer Nutzereingabe entsprechend der Bestätigungsinformation oder die Verifizierung durch die Rechnereinheit erfolgt, die als virtueller Teilnehmer in einem Instant-Messaging-System auftritt. Ebenso gut ist es auch möglich, dass die Registrierung und Verifizierung von einer anderen Rechnereinheit vorgenommen wird, die mit der als Teilnehmer auftretenden Rechnereinheit in Verbindung steht.

Die Erfindung bietet den Vorteil, dass Messenger-Kontaktdaten automatisiert verifiziert werden können. Insbesondere kann dieses Verfahren auch in Echtzeit durchgeführt werden, sofern sich der die Messenger-Kontaktdaten eingebende Nutzer in einem Online-Status befindet. Die beispielsweise am heimischen PC des Nutzers eingegebenen Messenger-Kontaktdaten gelangen über ein Netzwerk, wie dem Internet, zu der Rechnereinheit, die innerhalb des entsprechenden Instant-Messaging-Systems dem Nutzer über das Netzwerk die Bestätigungsinformation zusendet. Die entsprechend der Bestätigungsinformation erfolgende Nutzereingabe wird wiederum über das Netzwerk registriert, woraufhin die Messenger-Kontaktdaten verifiziert werden.

Die sich durch die Erfindung bietende Verifizierungsmöglichkeit von Messenger-Kontaktdaten kann insbesondere von allen Online-Diensten genutzt werden, die vor Nutzung ihrer angebotenen Dienste die Vertrauenswürdigkeit des jeweiligen Nutzers überprüfen wollen. Bei den Online-Diensten kann es sich beispielsweise um einen Online-Versandhandel, um eine Online-Auktionsbörse oder um einen Dienstleister jedweder Art handeln, der insbesondere über Internet seine Dienstleistungen Dritten anbietet. Insbesondere kann die automatisierte Verifizierung von Messenger-Kontaktdaten auch dazu genutzt werden, diese vor Eintragung in einem öffentlichen Nachschlagewerk, wie beispielsweise einem Telefonbuch oder dergleichen, auf ihren Wahrheitsgehalt zu überprüfen.

Um die Bearbeitungszeit der Verifizierung von Messenger-Kontaktdaten zu verringern, kann es vorgesehen sein, mehrere "Bots" einzusetzen, die zur Verifizierung in dem/den instant-Messaging-System/en als virtuelle Teilnehmer kommunizieren. Insbesondere können für verschiedene Online-Dienste verschiedene "Bots" eingesetzt sein. Typischerweise ist für jeden Online-Dienst jeweils ein "Bot" eingesetzt.

In einer vorteilhaften Ausgestaltung werden die erhaltenen Messenger-Kontaktdaten in einer Datenbank zumindest temporär abgespeichert. Die Abspeicherung in einer Datenbank bietet den Vorteil, dass mehrere Messenger-Kontaktdaten verwaltet werden können. Insbesondere ist es möglich, noch nicht verifizierte Messenger-Kontaktdaten als solche zu kennzeichnen, die im Falle einer temporären Speicherung nach einer gewissen Zeit oder am Ende einer erfolglosen Sitzung gelöscht werden können. Insbesondere zur Erstellung eines öffentlichen Nachschlagewerkes ist es hierbei sinnvoll, die verifizierten Messenger-Kontaktdaten in der Datenbank separat zu kennzeichnen. Dies erlaubt es, verifizierte von nicht verifizierten Messenger-Kontaktdaten zu unterscheiden, wodurch sichergestellt wird, dass lediglich verifizierte Messenger-Kontaktdaten zur Veröffentlichung im Nachschlagewerk gelangen.

Um eine möglichst umfassende Erreichbarkeit zu erzielen, wird ein Nutzer eines Nachschlagewerks in seinem Eintrag möglichst viele seiner Messenger-Kontaktdaten veröffentlichen wollen. Damit er bei einer Online-Eingabe seiner Messenger-Kontaktdaten ausreichend darüber informiert ist, welche seiner Messenger-Kontaktdaten zur Veröffentlichung übernommen werden, ist es vorteilhaft, wenn die erfolgte Verifizierung dem Nutzer mitgeteilt wird. Eine derartige Mitteilung ist natürlich auch für einen Nutzer eines Online-Dienstes sinnvoll, da er auf diese Weise den erfolgreichen Abschluss der durchgeführten Aktion erfährt. Bei der Nutzung eines Online-Versandhauses erfährt beispielsweise der Nutzer hierdurch, dass seine Bestellung entgegengenommen wurde und der Auftrag nunmehr von dem Online-Versandhaus bearbeitet wird.

Zur Verwaltung mehrerer Messenger-Kontaktdaten bzw. zur Handhabe einer Vielzahl von durchzuführenden Verifizierungen wird zweckmäßigerweise für jeden Nutzer eine temporäre Identifizierung erzeugt. Anhand dieser Identifizierung ist es möglich, eine registrierte Nutzereingabe entsprechend der übermittelten Bestätigungsinformation dem Nutzer bzw. den entsprechenden Messenger-Kontaktdaten zuzuordnen. Die Identifizierung wird insbesondere für jeden Eingang von Messenger-Kontaktdaten durchgeführt.

Um die Identifizierung von registrierten Nutzereingaben zu erleichtern, ist es weiter vorteilhaft, wenn die Bestätigungsinformation nutzerspezifisch erzeugt wird.

Somit kann alternativ oder zusätzlich zu einer für jeden Nutzer erzeugten temporären Identifizierung eine registrierte Nutzereingabe entsprechend der nutzerspezifischen Bestätigungsinformation eindeutig den jeweiligen Messenger-Kontaktdaten zugeordnet werden. Dies ist möglich, da jeder Nutzer eine ihn von einem anderen Nutzer unterscheidende Bestätigungsinformation derart erhält, dass ihn die entsprechende Nutzereingabe von anderen Nutzern unterscheidet.

Für den Fall, dass Messenger-Kontaktdaten eines Nutzers zu verschiedenen Instant-Messaging-Systemen verifiziert werden müssen, ist es zweckmäßig, wenn die Bestätigungsinformation in Abhängigkeit von dem jeweiligen Instant-Messaging-System erzeugt wird. Dies erlaubt es, eine Nutzereingabe, die entsprechend der Bestätigungsinformation erfolgt ist, direkt den Messenger-Kontaktdaten eines spezifischen Instant-Messaging-Systems zuzuordnen.

Als eine Bestätigungsinformation kann an den Nutzer beispielsweise eine spezifische Information mit der gleichzeitigen Aufforderung gesendet werden, diese Information einzugeben und an den Absender zurückzusenden. Die Zurücksendung kann dabei mittels E-Mail, innerhalb des Instant-Messaging-Systems oder per Web-Formular erfolgen. Dabei kann als Absender insbesondere eine Adresse angegeben werden, die die als virtueller Teilnehmer des Instant-Messaging-Systems wirkende Rechnereinheit kontrolliert oder die einem vom Nutzer gerade frequentierten Online-Dienst zugeordnet ist. Als eine spezifische Information kann beispielsweise ein Passwort, eine PIN-Nummer oder ein sonstiger Code verwendet werden. Zur Eingabe dieser spezifischen Information kann der Nutzer beispielsweise durch direkte Einblendung eines Eingabefeldes aufgefordert werden, welches von der Rechnereinheit oder einem Rechner des Online-Dienstes kontrolliert wird.

Vorteilhafterweise wird als Bestätigungsinformation ein auf eine Bestätigungs-URL verweisender Link versendet, wobei die Verifizierung bei Aufruf der Domain erfolgt, auf die die Bestätigungs-URL verweist. Der Begriff URL steht dabei für "U-niform Ressource Location" und drückt eine im Internet eindeutig identifizierbare Adresse aus. Mit der Bestätigungsinformation wird der Nutzer aufgefordert, den ihm zugesendeten Link als Bestätigung anzuklicken. Durch Klicken auf diesen Link wird im Internet-Netzwerk eine Verbindung zwischen dem Nutzer und der hinterlegten Adresse (Domain) geöffnet, was leicht registrierbar ist. Die Zusendung einer Bestätigungs-URL bietet insbesondere den Vorteil, dass der Nutzer durch eine einzige Aktion, nämlich dem Klicken auf den zugesendeten Link, die Verifizierung seiner Messenger-Kontaktdaten ermöglicht. Eine derartige Vorgehensweise ist insofern wenig fehlerbehaftet und weist hierdurch eine hohe Zuverlässigkeit auf.

In einer weiteren Variante fordert ein aufgerufener Online-Dienst den Nutzer über eine Online-Verbindung zur Eingabe der Messenger-Kontaktdaten auf. Dies geschieht beispielsweise dann, wenn der Nutzer über eine Online-Verbindung auf den Server eines Online-Dienstes zugreift, um direkt eine Dienstleistung anzufordern, wie insbesondere eine Online-Bestellung vorzunehmen. Vor Abschluss der gewünschten Aktion wird in diesem Fall der Nutzer über die Online-Verbindung vom Online-Dienst zur Eingabe der Messenger-Kontaktdaten aufgefordert. Auf diese Weise wird der Online-Dienst die Glaubwürdigkeit seines zukünftigen Vertragspartners überprüfen wollen. Nach Eingabe der Messenger-Kontaktdaten werden diese an die Rechnereinheit übermittelt, die daraufhin als virtueller Teilnehmer innerhalb des zugeordneten Instant-Messaging-Systems dem Nutzer eine Nachricht mit einer Bestätigungsinformation sendet. Ist der Online-Dienst beispielsweise ein Anbieter eines öffentlichen Nachschlagewerkes, so kann die Auf forderung der Messenger-Kontaktdaten auch mehrfach hintereinander geschehen, um alle zur Eintragung des Nutzers vorgesehenen Messenger-Kontaktdaten unterschiedlicher Instant-Messaging-Systeme verifizieren und somit zur Eintragung vorsehen zu können.

Hinsichtlich der Durchführung der Verifizierung kann beispielsweise die Recheneinheit über die Datenverbindung mit einem Rechner des Online-Dienstes kommunizieren, der die Messenger-Kontaktdaten empfängt und an die Recheneinheit weiterleitet. Hierzu kann beispielsweise ein vorhandener Rechner eines Online-Dienstes, wie ein WEB-Server, genutzt werden, um die Informationsabwicklung zwischen dem Nutzer und dem Online-Dienst vorzunehmen. Für die Registrierung ist eine nachgeschaltete Rechnereinheit vorgesehen, die mit entsprechenden Messenger-Kontaktdaten für einen virtuellen Teilnehmer in einer Anzahl von Instant-Messaging-Systemen ertüchtigt ist. Auf dieser Rechnereinheit ist hierzu der bereits erwähnte "Bot" implementiert. Zur Durchführung der Verifizierung empfängt der "Bot" die ihm vom Rechner des Online-Dienstes übermittelten Messenger-Kontaktdaten und kommuniziert mittels dieser Messenger-Kontaktdaten als Teilnehmer innerhalb des zugeordneten Instant-Messaging-Systems mit dem jeweiligen Nutzer. Die Registrierung einer Nutzereingabe entsprechend der übermittelten Bestätigungsinformation kann wiederum vom Rechner des Online-Dienstes vorgenommen werden, indem beispielsweise eine versendete Bestätigungs-URL direkt auf eine vom WEB-Server verwaltete Adresse führt. Diese Lösung bietet, da sie vorhandene Ressourcen ausnutzt, einen deutlichen Kostenvorteil.

Wird die Rechnereinheit eines derartigen Rechnersystems, welches die als virtueller Teilnehmer auftretende Rechnereinheit und einen Rechner eines Online-Dienstes umfasst, als Ganzes bei dem Online-Dienstleister implementiert, so erfolgt die Verifizierung ausschließlich beim Online-Dienst als solchen. Da eine derartige Vorgehensweise jedoch mit Kosten bezüglich der Implementierung, Wartung und Betrieb der Rechnereinheit verbunden ist, bietet sich als eine vorteilhafte Variante an, die Rechnereinheit, auf welcher der "Bot" installiert ist, separat bei einem Anbieter der automatischen Verifizierung aufzustellen. Die Kosten für Installierung, Instandhaltung und Betrieb der Rechnereinheit, auf welcher der "Bot" installiert ist, obliegt dann dem Anbieter der automatischen Verifizierung von Messenger-Kontaktdaten.

Je nach Ausführung des Rechnersystems ist es bezüglich der Datenübertragung sinnvoll, diese als eine direkte Verbindungsleitung auszubilden oder im Falle der räumlichen Trennung zwischen Rechnereinheit und Rechner des Online-Dienstes diese mittels eines öffentlichen Netzwerkes auszubilden. In letzterem Falle bietet sich als öffentliches Netzwerk insbesondere ein Internet an, wobei die Kommunikation über das Internet vorteilhafterweise verschlüsselt erfolgt.

Die auf eine Vorrichtung gerichtete Aufgabe wird erfindungsgemäß durch ein Rechnersystem mit einem Dateneingang und einem Netzwerkanschluss gelöst, welches dafür eingerichtet ist, über den Dateneingang Messenger-Kontaktdaten eines Nutzers zu empfangen, mittels des Netzwerkanschlusses selbsttätig als Teilnehmer in einem den Messenger-Kontaktdaten zugeordneten Instant-Messaging-System unter Verwendung der erhaltenen Messenger-Kontaktdaten dem Nutzer eine Nachricht mit einer Bestätigungsinformation zu senden, eine Nutzereingabe entsprechend der Bestätigungsinformation zu registrieren und daraufhin die Messenger-Kontaktdaten zu verifizieren.

Weitere vorteilhafte Ausführungen sind den jeweils auf ein Rechnersystem gerichteten Unteransprüchen zu entnehmen. Dabei sind sinngemäß die für das Verfahren genannten Vorteile jeweils auf das entsprechend ausgebildete Rechnersystem zu übertragen.

Insbesondere ist es vorteilhaft, wenn das Rechnersystem eine Rechnereinheit und einen Rechner eines Online-Dienstes mit dem Netzwerkanschluss umfasst, die über eine Datenverbindung miteinander verbunden sind, wobei die Rechnereinheit dafür eingerichtet ist, die Messenger-Kontaktdaten zu empfangen und an die Rechnereinheit weiterzuleiten. Ein derartiges Rechnersystem bietet die Möglichkeit einer räumlichen Trennung zwischen der als virtueller Teilnehmer in einer Anzahl von Instant-Messaging-Systemen fungierenden Rechnereinheit und der die Kommunikation mit dem Nutzer abwickelnden Rechner eines Online-Dienstes. Hierdurch können vorhandene Ressourcen optimal ausgenutzt und insbesondere der wesentliche Teil der automatischen Verifizierung von Messenger-Kontaktdaten extern durchgeführt werden.

Die genannte Aufgabe wird weiter erfindungsgemäß durch ein Computerprogrammprodukt gelöst, welches bei Ausführung auf einem Rechnersystem mit Dateneingang und Netzwerkanschluss dieses zur Durchführung des oben beschriebenen Verfahrens einer automatischen Verifizierung von Messenger-Kontaktdaten ertüchtigt.

Das Computerprogrammprodukt versetzt ein Rechnersystem in die Lage, über den Dateneingang Messenger-Kontaktdaten eines Nutzers zu empfangen, mittels des Netzwerkanschlusses selbsttätig als Teilnehmer in einem den Messenger-Kontaktdaten zugeordneten Instant-Messaging-System unter Verwendung der erhaltenen Messenger-Kontaktdaten dem Nutzer eine Nachricht mit einer Bestätigungsinformation zu senden und eine Nutzereingabe entsprechend der Bestätigungsinformation zu registrieren und daraufhin die Messenger-Kontaktdaten zu verifizieren.

Auf das Computerprogrammprodukt können die für ein Verfahren genannten Vorteile sinngemäß übertragen werden. Das Computerprogrammprodukt beinhaltet insbesondere den mehrfach erwähnten "Bot", der die Rechnereinheit in die Lage versetzt, mittels empfangen Messenger-Kontaktdaten als Teilnehmer unter bekannten Messenger-Kontaktdaten in einem Instant-Messaging-System automatisiert aufzutreten bzw. zu kommunizieren.

Ausführungsbeispiele der Erfindung werden anhand einer Zeichnung näher erläutert. Dabei zeigen:
- Fig. 1: schematisch ein Rechnersystem zur Durchführung einer automatischen Verifizierung von Messenger-Kontaktdaten und
- Fig. 2: ein Ablaufdiagramm zur Durchführung des Verfahrens der automatischen Verifizierung von Messenger-Kontaktdaten.

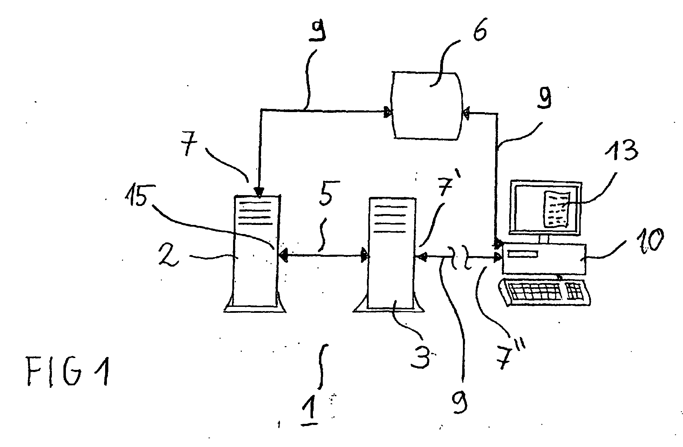

Aus Fig. 1 wird der prinzipielle Aufbau eines Rechnersystems 1 ersichtlich, welches sich zur Durchführung einer automatischen Verifizierung von Messenger-Kontaktdaten eignet. Das Rechnersystem 1 umfasst hierzu eine Rechnereinheit 2 sowie einen Rechner 3 eines Online-Dienstes. Der Rechner 3 des Online-Dienstes ist dabei ein WEB-Server, der über eine Datenverbindung 5, die entweder als direkte Verbindung oder mittels eines öffentlichen Netzwerkes, wie insbesondere dem Internet, realisiert sein kann, mit der Rechnereinheit 2 verbunden ist. Auf der Rechnereinheit 2 ist ein so genannter "Bot" in Form eines Computerprogrammproduktes installiert, der die Rechnereinheit 2 ertüchtigt, als ein virtueller Teilnehmer innerhalb eines Instant-Messaging-Systems 6 zu kommunizieren. Hierzu ist die Rechnereinheit 2 unter eigenen Messenger-Kontaktdaten in einer Anzahl von Instant-Messaging-Systemen angemeldet.

Über den Rechner 3 des Online-Dienstes wird ein Online-Bestellhandel abgewickelt. Hierzu liefert der Rechner 3 des Online-Dienstes einem entsprechenden Nutzer als Information die verfügbaren Produkte einschließlich der zugeordneten Preise. Ebenso stellt der Rechner 3 einem Nutzer online ein entsprechendes Bestellformular oder eine entsprechend zur Bestellung geeignete Eingabemaske zur Verfügung.

Sowohl der Rechner 3 des Online-Dienstes als auch die Rechnereinheit 2, die virtuell in dem Instant-Messaging-System 6 kommuniziert, verfügen über einen Netzwerkanschluss 7,7'. Der Netzwerkanschluss 7,7' ertüchtigt beide Einheiten zu einer Kommunikation über ein öffentliches Netzwerk wie dem Internet 9.

Ein den Bestellservice des Online-Dienstes frequentierender Nutzer kontaktiert mittels seines zuhause aufgestellten PC's 10, der ebenfalls über einen Netzwerkanschluss 7" verfügt, via Internet 9 zunächst den Rechner 3 des Online-Dienstes. Der Nutzer möchte den Bestellservice des Online-Dienstes nutzen und ein bestimmtes Produkt bestellen. Nach Auswahl des entsprechenden Produktes wird der Nutzer von dem als WEB-Server ausgebildeten Rechner 3 des Online-Dienstes mittels eines Anmeldeformulars 13 zur Eingabe seiner Messenger-Kontaktdaten aufgefordert. Um den Bestellvorgang erfolgreich abzuschließen, wird der Nutzer auf seinem heimischen PC 10 in das am Bildschirm auftretende Anmeldeformular 13 seine entsprechenden Messenger-Kontaktdaten eintragen.

Nach erfolgter Eingabe stehen diese Messenger-Kontaktdaten dem Rechner 3 des Online-Dienstes zur Verfügung.

Zur Verifizierung der Messenger-Kontaktdaten, was eine Voraussetzung zur Einleitung des Bestellvorgangs ist, leitet der Rechner 3 des Online-Dienstes über die Datenverbindung 5 die erhaltenen Messenger-Kontaktdaten der Rechnereinheit 2 zu. Dort werden die empfangenen Messenger-Kontaktdaten zunächst temporär in einer Datenbank abgespeichert. Die Rechnereinheit 2 kommuniziert daraufhin über das Internet 9 als ein virtueller Teilnehmer in dem den Messenger-Kontaktdaten zugeordneten Instant-Messaging-System 6. Unter Verwendung der erhaltenen Messenger-Kontaktdaten sendet die Rechnereinheit 2 in dem Instant-Messaging-System 6 dem Nutzer wiederum über das Internet 9 als eine Bestätigungsinformation eine Bestätigungs-URL mit der gleichzeitigen Aufforderung zu, zum erfolgreichen Abschluss seiner Online-Bestellung auf den auf die Bestätigungs-URL verweisenden Link zu klicken. Dies kann beispielsweise durch die Worte "zur Bestätigung Ihrer eingegebenen Messenger-Kontaktdaten werden Sie gebeten, auf den beiliegenden Link zu klicken" geschehen.

Die zugesendete Bestätigungs-URL verweist direkt auf eine vom Rechner 3 des Online-Dienstes verwaltete Domain. Durch einen Klick auf den entsprechenden Link greift der Nutzer 3 mit seinem heimischen PC 10 über das Internet 9 und den Netzwerkanschluss 7' auf die entsprechende, vom Rechner 3 verwaltete Adresse zu. Dieser Zugriff wird von dem Rechner 3 registriert, woraufhin die eingegebenen Messenger-Kontaktdaten verifiziert und der Bestellvorgang erfolgreich abgeschlossen wird. Über die erfolgreiche Verifizierung bzw. den erfolgreichen Abschluss des Bestellvorganges wird der Nutzer über das Internet 9 an seinem heimischen PC 10 entsprechend informiert. Zur Identifizierung der Bestätigungs-URL erzeugt die Rechnereinheit 2 jeweils für die erhaltenen Messenger-Kontaktdaten eine Identifizierung, die sie gemeinsam mit der vergebenen Bestätigungs-URL dem Rechner 3 des Online-Dienstes mitteilt. Nach erfolgreicher Sitzung werden auf der Rechnereinheit 2 die temporär abgespeicherten Messenger-Kontaktdaten gelöscht.

Alternativ wird von der Rechnereinheit (2) die Domain verwaltet, auf welche die zugesendete Bestätigungs-URL verweist. In diesem Fall wird der Zugriff auf die von der Rechnereinheit (2) verwaltete Adresse auch von der Rechnereinheit (2) registriert, woraufhin die Verifizierung der Messenger-Kontaktdaten erfolgt. Die Mitteilung der Verifizierung erfolgt dann über einen entsprechenden Datenkanal, beispielsweise die Datenverbindung 5, an den Rechner (2) des Online-Dienstes. Bei verschiedenen zu bedienenden Online-Diensten verwaltet die Rechnereinheit (2) beispielsweise eine vorgegebene Domain und teilt den jeweiligen Online-Diensten spezifische Sub-Domains zu, auf welche die spezifischen Bestätigungs-URL verweisen. Über die Sub-Domains sind somit verschiedene Online-Dienste identifizier- bzw. verwaltbar. Diese Ausgestaltung bietet sich insbesondere für einen Anbieter der automatischen Verifizierung an. Bei diesem ist dann die Rechnereinheit (2) installiert, die die verschiedenen Sub-Domains für unterschiedliche Online-Dienste verwaltet.

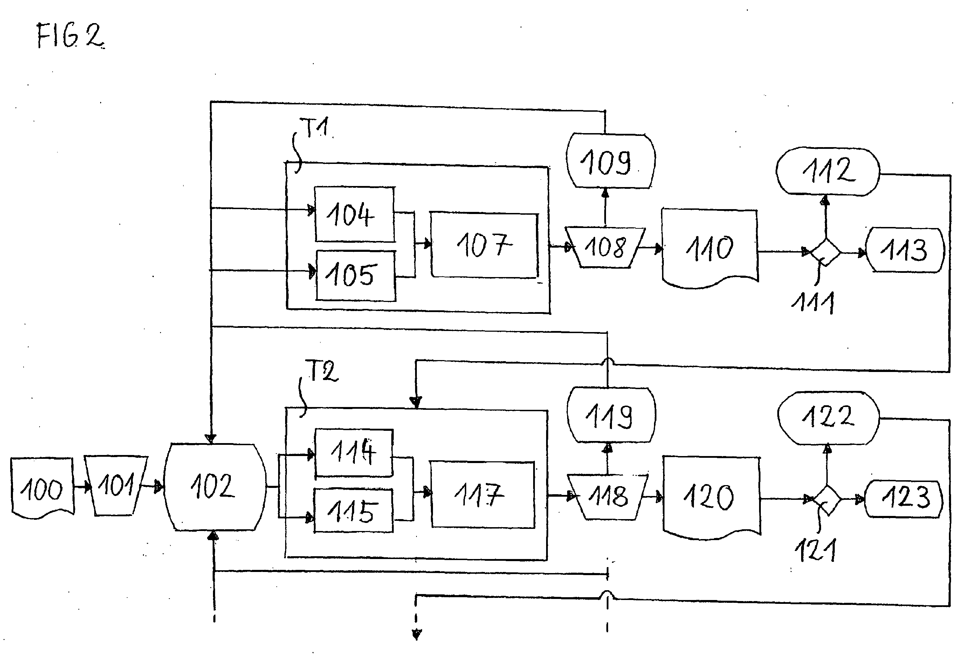

In Fig. 2 ist zur Veranschaulichung der automatischen Verifizierung von Messenger-Kontaktdaten ein entsprechende Ablaufdiagramm dargestellt. Bei dem dargestellten Verfahren handelt es sich um eine automatische Verifizierung von Messenger-Kontaktdaten, die ein Nutzer zwecks Eintragung in einem öffentlichen Nachschlagewerk online für den das Nachschlagewerk publizierenden Anbieter eingibt.

Das Verifizierungsverfahren beginnt mit dem Verfahrensschritt 100, in welchem gemäß Fig. 1 der Nutzer eines heimischen PC 10, der seine Messenger-Kontaktdaten in einem öffentlichen Nachschlagewerk veröffentlicht haben möchte, mittels eines Anmeldeformulars 13 zur Eingabe seiner Messenger-Kontaktdaten aufgefordert wird. Entsprechend der Aufforderung wird der Nutzer im Verfahrensschritt 101 seine Messenger-Kontaktdaten in das Anmeldeformular 13 eintragen. Die eingegebenen Messenger-Kontaktdaten werden im Verfahrensschritt 102 temporär in einer Datenbank gespeichert und als "nicht verifiziert" gekennzeichnet. In der Datenbank werden die jeweils einem Instant-Messaging-System zugeordneten Messenger-Kontaktdaten jeweils einzeln identifizierbar abgespeichert. Die Abspeicherung der Messenger-Kontaktdaten ist gemäß Fig. 1 auf der Rechnereinheit 2 verwirklicht, die mittels eines installierten "Bot" als virtueller Teilnehmer in einer Anzahl von Instant-Messaging-Systemen kommunizieren kann.

Nach Identifizierung des einem Satz von Messenger-Kontaktdaten zugeordneten Instant-Messaging-Systems, in Fig. 2 beispielhaft als Messenger T1 bezeichnet, wird in den Verfahrensschritten 104 und 105 auf der Rechnereinheit 2 gemäß Fig. 1 eine dem Satz von Messenger-Kontaktdaten zugeordnete temporäre Identifizierung erzeugt und dieser Identifizierung zugeordnet eine vom Nutzer- und vom Instant-Messaging-System abhängige Bestätigungs-URL generiert. Die so sowohl dem Nutzer als auch dem Satz von Messenger-Kontaktdaten zuordenbare Bestätigungs-URL wird im Verfahrensschritt 107 automatisch an den Messenger-Client des Nutzers versendet. Mit dem Versand der Bestätigungs-URL wird der Nutzer aufgefordert, die Bestätigungs-URL zur Verifizierung seiner eingegebenen Messenger-Kontaktdaten anzuklicken.

Im Verfahrensschritt 108 bestätigt der Nutzer durch Klicken auf die ihm zugeleitete Bestätigungs-URL, dass er erstens unter den eingegebenen Messenger-Kontaktdaten tatsächlich kontaktierbar ist und dass zweitens die Messenger-Kontaktdaten tatsächlich existieren. Der durch Klicken ausgelöste Aufruf der Bestätigungs-URL wird im Verfahrensschritt 109 registriert und infolge dessen der den Messenger-Kontaktdaten zugeordnete Datensatz in der der Datenbank als verifiziert gekennzeichnet.

Anschließend wird dem Nutzer im Verfahrensschritt 110 die Bestätigung der Verifizierung angezeigt und gleichzeitig eine Übersicht der noch nicht verifizierten Kontaktdaten entsprechend den temporär abgespeicherten weiteren Messenger-Kontaktdaten angezeigt. Durch entsprechende Auswahl kann der Nutzer im Verfahrensschritt 111 entscheiden, ob er gemäß Verfahrensschritt 112 noch nicht bestätigte Messenger-Kontaktdaten jetzt bestätigen möchte oder aber, ob er gemäß Verfahrensschritt 113 den Vorgang abschließen möchte.

Möchte der Benutzer die von ihm zur Eintragung in das öffentliche Nachschlagewerk vorgesehenen weiteren Messenger-Kontaktdaten gemäß Verfahrensschritt 112 bestätigen, so arbeitet die Rechnereinheit 2 gemäß Fig. 1 unter Nutzung der weiteren Messenger-Kontaktdaten als virtueller Teilnehmer weiter in dem zugeordneten Instant-Messaging-System des Typs Messenger T2.

Hierzu wird wiederum in den Verfahrensschritten 114 und 115, die den Verfahrensschritten 104 und 105 entsprechen, eine dem Nutzer zugeordnete temporäre Identifizierung erzeugt und eine nutzerspezifische und dem Instant-Messaging-System zugeordnete Bestätigungs-URL generiert. Der weitere dargestellte Verfahrensablauf der Schritte 117 bis 123 ist analog den dargestellten Verfahrensschritten 107 bis 113, wobei nun jedoch die Messenger-Kontaktdaten des Messenger T2 verifiziert werden.

Die dargestellte automatische Verifizierung der eingegebenen Messenger-Kontaktdaten wird für jeden einem Instant-Messaging-System zugeordneten Datensatz von Messenger-Kontaktdaten analog durchgeführt, bis entweder alle eingegebenen Messenger-Kontaktdaten verifiziert sind oder der Benutzer gemäß den Verfahrensschritten 113 oder 123 den Vorgang nach Verifizierung eines bestimmten Datensatzes abschließt.

Die in der Datenbank abschließend als verifiziert gekennzeichneten Messenger-Kontaktdaten werden dauerhaft abgespeichert und vom Verwalter bzw. Anbieter des öffentlichen Nachschlagewerkes beispielsweise über das Internet insbesondere recherchierbar veröffentlicht.

## Patentansprüche

1. Verfahren zur automatischen Verifizierung von Messenger-Kontaktdaten,
wobei:
- eine Rechnereinheit (2) über eine Datenverbindung (5) eingegebene Messenger-Kontaktdaten eines Nutzers erhält,
- die Rechnereinheit (2) selbsttätig als Teilnehmer in einem den Messenger-Kontaktdaten zugeordneten Instant-Messaging-System (6) unter Verwendung der erhaltenen Messenger-Kontaktdaten dem Nutzer eine Nachricht mit einer Bestätigungsinformation sendet,
- eine Nutzereingabe entsprechend der Bestätigungsinformation registriert wird, und
- daraufhin die Messenger-Kontaktdaten verifiziert werden.

2. Verfahren nach Anspruch 1,
wobei die erhaltenen Messenger-Kontaktdaten in einer Datenbank zumindest temporär abgespeichert werden.

3. Verfahren nach Anspruch 2,
wobei die verifizierten Messenger-Kontaktdaten in der Datenbank gekennzeichnet werden.

4. Verfahren nach einem der vorhergehenden Ansprüche,
wobei die Verifizierung dem Nutzer mitgeteilt wird.

5. Verfahren nach einem der vorhergehenden Ansprüche,
wobei für jeden Nutzer eine temporäre Identifizierung erzeugt wird.

6. Verfahren nach einem der vorhergehenden Ansprüche,
wobei die Bestätigungsinformation nutzerspezifisch erzeugt wird.

7. Verfahren nach einem der vorhergehenden Ansprüche,
wobei die Bestätigungsinformation in Abhängigkeit von dem Instant-Messaging-System (6) erzeugt wird.

8. Verfahren nach einem der vorhergehenden Ansprüche,
wobei als Bestätigungsinformation ein auf eine Bestätigungs-URL verweisender Link versendet wird, und wobei die Verifizierung bei Aufruf der Domain erfolgt, auf die die Bestätigungs-URL verweist.

9. Verfahren nach einem der vorhergehenden Ansprüche,
wobei ein aufgerufener Online-Dienst den Nutzer über eine Online-Verbindung zur Eingabe der Messenger-Kontaktdaten auffordert.

10. Verfahren nach Anspruch 9,
wobei die Rechnereinheit (2) über die Datenverbindung mit einem Rechner (3) des Online-Dienstes kommuniziert, der die Messenger-Kontäktdaten empfängt und an die Rechnereinheit (2) weiterleitet.

11. Verfahren nach Anspruch 9 oder 10,
wobei die Rechnereinheit (2) dem Rechner (3) des Online-Dienstes die Bestätigungsinformation mitteilt und der Rechner (3) des Online-Dienstes die Messenger-Kontaktdaten bei Registrierung der Nutzereingabe entsprechend der Bestätigungsinformation verifiziert.

12. Verfahren nach einem der Ansprüche 9 bis 11,
wobei die Rechnereinheit (2) und der Rechner (3) des Online-Dienstes über eine direkte Verbindungsleitung kommunizieren.

13. Verfahren nach einem der Ansprüche 9 bis 11,
wobei die Rechnereinheit (2) und der Rechner (3) des Online-Dienstes über ein öffentliches Netzwerk, insbesondere über ein Internet (9), miteinander kommunizieren.

14. Verfahren nach Anspruch 13,
wobei die Kommunikation über das öffentliche Netzwerk verschlüsselt erfolgt.

15. Rechnersystem (1) mit einem Dateneingang und einem Netzwerkanschluss (7,7',7"), das dafür eingerichtet ist,
- über den Dateneingang (15) Messenger-Kontaktdaten eines Nutzers zu empfangen,
- mittels des Netzwerkanschlusses (7,7',7") selbsttätig als Teilnehmer in einem den Messenger-Kontaktdaten zugeordneten Instant-Messaging-System (6) unter Verwendung der erhaltenen Messenger-Kontaktdaten dem Nutzer eine Nachricht mit einer Bestätigungsinformation zu senden,
- eine Nutzereingabe entsprechend der Bestätigungsinformation zu registrieren und daraufhin die Messenger-Kontaktdaten zu verifizieren.

16. Rechnersystem (1) nach Anspruch 15,
mit einer Datenbank zur wenigstens temporären Abspeicherung der erhaltenen Messenger-Kontaktdaten.

17. Rechnersystem (1) nach Anspruch 16,
das dafür eingerichtet ist, die verifizierten Messenger-Kontaktdaten in der Datenbank zu kennzeichnen.

18. Rechnersystem (1) nach einem der Ansprüche 15 bis 17,
das dafür eingerichtet ist, mittels des Netzwerkanschlusses (7,7',7") dem Nutzer die Verifizierung mitzuteilen.

19. Rechnersystem (1) nach einem der Ansprüche 15 bis 18,
das dafür eingerichtet ist, für jeden Nutzer eine temporäre Identifizierung zu erzeugen.

20. Rechnersystem (1) nach einem der Ansprüche 15 bis 19,
das dafür eingerichtet ist, die Bestätigungsinformation nutzerspezifisch zu erzeugen.

21. Rechnersystem (1) nach einem der Ansprüche 15 bis 20,
das dafür eingerichtet ist, die Bestätigungsinformation in Abhängigkeit von dem Instant-Messaging-System (6) zu erzeugen.

22. Rechnersystem (1) nach einem der Ansprüche 15 bis 21,
das dafür eingerichtet ist, als Bestätigungsinformation einen auf eine Bestätigungs-URL verweisenden Link zu versenden und die Messenger-Kontaktdaten bei Aufruf der Domain zu verifizieren, auf die die Bestätigungs-URL verweist.

23. Rechnersystem (1) nach einem der Ansprüche 15 bis 22,
das dafür eingerichtet ist, mittels des Netzwerkanschlusses (7,7',7") den Nutzer zur Eingabe der Messenger-Kontaktdaten aufzufordern.

24. Rechnersystem (1) nach einem der Ansprüche 15 bis 22,
das eine Rechnereinheit (2) und einen Rechner (3) eines Online-Dienstes mit dem Netzwerkanschluss (7,7',7") umfasst, die über eine Datenverbindung (5) miteinander verbunden sind, wobei der Rechner (3) dafür eingerichtet ist, die Messenger-Kontaktdaten zu empfangen und an die Rechnereinheit (2) weiterzuleiten.

25. Rechnersystem (1) nach Anspruch 24,
wobei die Rechnereinheit (2) dafür eingerichtet ist, dem Rechner (3) des Online-Dienstes über die Datenverbindung (5) die Bestätigungsinformation mitzuteilen und der Rechner des Online-Dienstes (3) dafür eingerichtet ist, eine Nutzereingabe entsprechend der Bestätigungsinformation zu registrieren und daraufhin die Messenger-Kontaktdaten zu verifizieren.

26. Rechnersystem (1) nach Anspruch 24 oder 25,
wobei die Datenverbindung (5) eine direkte Verbindungsleitung ist.

27. Rechnersystem (1) nach Anspruch 24 oder 25,
wobei die Datenverbindung (5) eine öffentliche Netzwerkverbindung, insbesondere ein Internet (9) ist.

28. Rechnersystem (1) nach Anspruch 27,
das zu einer verschlüsselten Kommunikation über die öffentliche Netzwerkverbindung eingerichtet ist.

29. Computerprogrammprodukt, insbesondere zur Durchführung eines Verfahrens gemäß einem der Ansprüche 1 bis 14, welches bei Ausführung auf einem Rechnersystem (2) mit Dateneingang und Netzwerkanschluss dieses in die Lage versetzt,
- über den Dateneingang Messenger-Kontaktdaten eines Nutzers zu empfangen,
- mittels des Netzwerkanschlusses (7,7',7") selbsttätig als Teilnehmer in einem den Messanger-Kontaktdaten zugeordneten Instant-Messaging-System (6) unter Verwendung der erhaltenen Messenger-Kontaktdaten dem Nutzer eine Nachricht mit einer Bestätigungsinformation zu senden und
- eine Nutzereingabe entsprechend der Bestätigungsinformation zu registrieren und daraufhin die Messenger-Kontaktdaten zu verifizieren.

## Claims

1. Method for automatically verifying messenger contact data, where:
- a computer unit (2) receives input messenger contact data from a user via a data link (5),
- the computer unit (2) automatically, as a subscriber in an instant messaging system (6) associated with the messenger contact data, uses the received messenger contact data to send to the user a message containing a piece of confirmation information,
- a user input is registered in line with the confirmation information, and
- the messenger contact data are then verified.

2. Method according to Claim 1,
where the received messenger contact data are stored at least temporarily in a database.

3. Method according to Claim 2,
where the verified messenger contact data are marked in the database.

4. Method according to one of the preceding claims,
where the verification is communicated to the user.

5. Method according to one of the preceding claims,
where a temporary identification is produced for each user.

6. Method according to one of the preceding claims,
where the confirmation information is produced on a user-specific basis.

7. Method according to one of the preceding claims,
where the confirmation information is produced on the basis of the instant messaging system (6).

8. Method according to one of the preceding claims,
where the confirmation information sent is a link referring to a confirmation URL, and where the verification takes place when the domain to which the confirmation URL refers is called.

9. Method according to one of the preceding claims,
where a called online service uses an online connection to ask the user to input the messenger contact data.

10. Method according to Claim 9,
where the computer unit (2) uses the data link to communicate with a computer (3) from the online service which receives the messenger contact data and forwards them to the computer unit (2).

11. Method according to Claim 9 or 10,
where the computer unit (2) communicates the confirmation information to the online service's computer (3), and the online service's computer (3) verifies the messenger contact data upon registration of the user input in line with the confirmation information.

12. Method according to one of Claims 9 to 11,
where the computer unit (2) and the online service's computer (3) communicate via a direct connecting line.

13. Method according to one of Claims 9 to 11,
where the computer unit (2) and the online service's computer (3) communicate with one another via a public network, particularly via an Internet (9).

14. Method according to Claim 13,
where the communication via the public network takes place in encrypted form.

15. Computer system (1) having a data input and a network connection (7, 7', 7'') which is set up
- to receive messenger contact data from a user via the data input (15),
- to use the network connection (7, 7', 7") for automatically, as a subscriber in an instant messaging system (6) associated with the messenger contact data, using the received messenger contact data to send to the user a message containing a piece of confirmation information,
- to register a user input in line with the confirmation information and then to verify the messenger contact data.

16. Computer system (1) according to Claim 15,
having a database for at least temporary storage of the received messenger contact data.

17. Computer system (1) according to Claim 16,
which is set up to mark the verified messenger contact data in the database.

18. Computer system (1) according to one of Claims 15 to 17,
which is set up to use the network connection (7, 7', 7'') to communicate the verification to the user.

19. Computer system (1) according to one of Claims 15 to 18,
which is set up to produce a temporary identification for each user.

20. Computer system (1) according to one of Claims 15 to 19,
which is set up to produce the confirmation information on a user-specific basis.

21. Computer system (1) according to one of Claims 15 to 20,
which is set up to produce the confirmation information on the basis of the instant messaging system (6).

22. Computer system (1) according to one of Claims 15 to 21,
which is set up to send a link referring to a confirmation URL as confirmation information and to verify the messenger contact data when the domain to which the confirmation URL refers is called.

23. Computer system (1) according to one of Claims 15 to 22,
which is set up to use the network connection (7, 7', 7 ") to ask the user to input the messenger contact data.

24. Computer system (1) according to one of Claims 15 to 22,
which comprises a computer unit (2) and a computer (3) from an online service with the network connection (7, 7', 7") which are connected to one another via a data link (5), where the computer (3) is set up to receive the messenger contact data and to forward them to the computer unit (2).

25. Computer system (1) according to Claim 24,
where the computer unit (2) is set up to communicate the confirmation information to the online service's computer (3) via the data link (5), and the online service's computer (3) is set up to register a user input in line with the confirmation information and then to verify the messenger contact data.

26. Computer system (1) according to Claim 24 or 25,
where the data link (5) is a direct connecting line.

27. Computer system (1) according to Claim 24 or 25,
where the data link (5) is a public network connection, particularly an Internet (9).

28. Computer system (1) according to Claim 27,
which is set up for encrypted communication via the public network connection.

29. Computer program product, particularly for carrying out a method according to one of Claims 1 to 14, which, upon execution on a computer system (2) having a data input and a network connection, allows it
- to receive messenger contact data from a user via the data input,
- to use the network connection (7, 7', 7") for automatically, as a subscriber in an instant messaging system (6) associated with the messenger contact data,' using the received messenger contact data to send to the user a message containing a piece of confirmation information, and
- to register a user input in line with the confirmation information and then to verify the messenger contact data.

## Revendications

1. Procédé de vérification automatique de données de contact de messager, dans lequel :
- une unité de calcul (2) reçoit des données de contact de messager d'un utilisateur saisies par l'intermédiaire d'une liaison de données (5),
- l'unité de calcul (2) envoie un message comportant une information de confirmation automatiquement en tant qu'abonné à un système de messagerie instantanée (6) associé aux données de contact de messager en utilisant les données de contact de messager reçues,
- une saisie de l'utilisateur correspondant à l'information de confirmation est enregistrée, et
- ensuite les données de contact de messager sont vérifiées.

2. Procédé selon la revendication 1, dans lequel les données de contact de messager reçues sont mémorisées au moins temporairement dans une banque de données.

3. Procédé selon la revendication 2, dans lequel les données de contact de messager vérifiées sont marquées dans la banque de données.

4. Procédé selon l'une des revendications précédentes, dans lequel la vérification est communiquée à l'utilisateur.

5. Procédé selon l'une des revendications précédentes, dans lequel une identification temporaire est générée pour chaque utilisateur.

6. Procédé selon l'une des revendications précédentes, dans lequel l'information de confirmation est générée spécifiquement à un utilisateur.

7. Procédé selon l'une des revendications précédentes, dans lequel l'information de confirmation est générée selon le système de messagerie instantanée (6).

8. Procédé selon l'une des revendications précédentes, dans lequel, en tant qu'information de confirmation, un lien renvoyant à une URL de confirmation est envoyé, et dans lequel la vérification est effectuée lors de l'appel du domaine, auquel renvoie l'URL de confirmation.

9. Procédé selon l'une des revendications précédentes, dans lequel un service en ligne appelé invite l'utilisateur à saisir les données de contact de messager par l'intermédiaire d'une liaison en ligne.

10. Procédé selon la revendication 9, dans lequel l'unité de calcul (2) communique par l'intermédiaire de la liaison de données avec un calculateur (3) du service en ligne, qui reçoit les données de contact de messager et les transmet à l'unité de calcul (2).

11. Procédé selon la revendication 9 ou 10, dans lequel l'unité de calcul (2) communique au calculateur (3) du service en ligne l'information de confirmation et le calculateur (3) du service en ligne vérifie les données de contact de messager lors de l'enregistrement de la saisie de l'utilisateur correspondant à l'information de confirmation.

12. Procédé selon l'une des revendications 9 à 11, dans lequel l'unité de calcul (2) et le calculateur (3) du service en ligne communiquent par l'intermédiaire d'une ligne directe.

13. Procédé selon l'une des revendications 9 à 11, dans lequel l'unité de calcul (2) et le calculateur (3) du service en ligne communiquent par l'intermédiaire d'un réseau public, en particulier par l'intermédiaire d'Internet (9) .

14. Procédé selon la revendication 13, dans lequel la communication est effectuée de façon cryptée par l'intermédiaire du réseau public.

15. Système informatique (1) comportant une entrée de données et une connexion réseau (7, 7', 7"), qui est agencé
- pour recevoir les données de contact de messager d'un utilisateur par l'intermédiaire de l'entrée de données (15),
- pour envoyer à l'utilisateur un message avec une information de confirmation par l'intermédiaire de la connexion réseau (7, 7', 7") automatiquement en tant qu'abonné à un système de messagerie instantanée (6) associé aux données de contact de messager en utilisant les données de contact de messager reçues,
- pour enregistrer une saisie d'utilisateur correspondant à l'information de confirmation et ensuite pour vérifier les données de contact de messager.

16. Système informatique (1) selon la revendication 15, comportant une banque de données pour mémoriser au moins temporairement les données de contact de messager reçues.

17. Système informatique (1) selon la revendication 16, qui est agencé pour identifier les données de contact de messager vérifiées dans la banque de données.

18. Système informatique (1) selon l'une des revendications 15 à 17, qui est agencé pour communiquer la vérification à l'utilisateur au moyen de la connexion réseau (7, 7', 7").

19. Système informatique (1) selon l'une des revendications 15 à 18, qui est agencé pour le générer une identification temporaire pour chaque utilisateur.

20. Système informatique (1) selon l'une des revendications 15 à 19, qui est agencé pour générer à un utilisateur l'information de confirmation.

21. Système informatique (1) selon l'une des revendications 15 à 20, qui est agencé, pour générer l'information de confirmation selon le système de messagerie instantanée (6).

22. Système informatique (1) selon l'une des revendications 15 à 21, qui est agencé, pour envoyer un lien renvoyant à une URL de confirmation en tant qu'information de confirmation et pour vérifier les données de contact de messager lors de l'appel du domaine, auquel renvoie l'URL de confirmation.

23. Système informatique (1) selon l'une des revendications 15 à 22, qui est agencé, pour inviter l'utilisateur à saisir les données de contact de messager au moyen de la connexion réseau (7, 7', 7").

24. Système informatique (1) selon l'une des revendications 15 à 22, qui comprend une unité de calcul (2) et un calculateur (3) d'un service en ligne avec la connexion réseau (7, 7', 7"), qui sont reliés l'un à l'autre par l'intermédiaire d'une liaison de données (5), où le calculateur (3) est agencé pour recevoir les données de contact de messager et les transmettre à l'unité de calcul (2).

25. Système informatique (1) selon la revendication 24, dans lequel l'unité de calcul (2) est agencée pour communiquer l'information de confirmation au calculateur (3) du service en ligne par l'intermédiaire de la liaison de données (5) et le calculateur du service en ligne (3) est agencé pour enregistrer une saisie d'utilisateur conformément à l'information de confirmation et ensuite pour vérifier les données de contact de messager.

26. Système informatique (1) selon la revendication 24 ou 25, dans lequel la liaison de données (5) est une ligne directe.

27. Système informatique (1) selon la revendication 24 ou 25, dans lequel la liaison de données (5) est une liaison réseau publique, en particulier Internet (9).

28. Système informatique (1) selon la revendication 27, qui est agencé pour une communication cryptée par l'intermédiaire de la liaison réseau publique.

29. Produit de programme informatique, en particulier pour exécuter un procédé selon l'une des revendications 1 à 14, qui, lors de l'exécution sur un système informatique (2) comportant une entrée de données et une connexion réseau, amène celui-ci
- à recevoir les données de contact de messager d'un utilisateur par l'intermédiaire de l'entrée de données,
- à envoyer un message avec une information de confirmation à l'utilisateur grâce à la connexion réseau (7, 7', 7") automatiquement en tant qu'abonné à un système de messagerie instantanée (6) associé aux données de contact de messager en utilisant les données de contact de messager reçues et
- enregistrer une saisie de l'utilisateur conformément à l'information de confirmation et ensuite de vérifier les données de contact de messager.
